# EUROPÄISCHE PATENTSCHRIFT

(11) **EP 0 583 690 B1**
(45) Veröffentlichungstag und Bekanntmachung des Hinweises auf die Patenterteilung: **10.06.1998**
(21) Anmeldenummer: 93112536.3
(22) Anmeldetag: 05.08.1993
(51) Int. Cl.: G06K 19/07, G06K 7/00

(54) **Chip-Karte mit Feldstärkedetektor**
Chip card with field intensity detector
Carte à puce pourvue d'un détecteur d'intensité de champ

(30) Priorität: 20.08.1992 DE 4227551
(43) Veröffentlichungstag der Anmeldung: 23.02.1994
(73) Patentinhaber: TEMIC TELEFUNKEN microelectronic GmbH, 74072 Heilbronn (DE)
(72) Erfinder: Bruhnke, Michael, D-80798 München (DE); Smith, Stuart, D-81667 München (DE); Klötzig, Gerold, D-85386 Eching (DE); Klosa, Klaus, D-80337 München (DE)
(74) Vertreter: Maute, Hans-Jürgen, Dipl.-Ing.

(56) Entgegenhaltungen:
- EP-A- 0 496 023
- FR-A- 2 636 188
- GB-A- 2 208 025
- GB-A- 2 208 058
- US-A- 4 463 353
- US-A- 4 546 241
- US-A- 4 924 171

## Beschreibung

Die Erfindung betrifft eine kontakt- und batterielose Chip-Karte nach dem Oberbegriff des Anspruchs 1.

Derartige Chip-Karten sind z.B. aus Winfried Wigand, "Die Karte mit dem Chip", Siemens Nixdorf Informationssysteme AG, Berlin und München, 1991, insbesondere Seite 34-36 bekannt. Bei den bekannten kontakt- und batterielosen Chip-Karten erfolgt die Stromversorgung durch z.B. transformatorische Kupplung über ein von einem zugehörigen Schreib-Lese-Gerät erzeugten Wechselfeld. Auch die Datenübertragung von und zu der Chip-Karte erfolgt durch Modulation dieses Wechselfelds. Bestimmte Funktionen der Chip-Karte, wie z.B. die Programmierung von EEPROM-Speicherzellen mit Daten, die über das Feld zur Chip-Karte gesendet werden, benötigen eine größere Energiemenge als andere Funktionen der Karte, wie z.B. das Senden und Empfangen von Daten. Diese energieaufwendigen Funktionen werden bei zu geringer Stromversorgung nur fehlerhaft und unvollständig durchgeführt. So kann z.B. bei der Programmierung von EEPROM-Zellen der Chip-Karte der Datenerhalt nicht sichergestellt werden, wenn die Stromversorgung der Chip-Karte nicht ausreichend ist. Da die Stromversorgung der Chip-Karte neben anderen Faktoren auch vom Abstand zum Schreib-Lese-Gerät und von dessen Sendeleistung abhängig ist, bewirkt eine Änderung der Entfernung zwischen Chip-Karte und Schreib-Lese-Gerät unter Umständen, daß die Funktionen der Chip-Karte, die eine größere Energiemenge zu ihrer Durchführung benötigen, nicht richtig ausgeführt werden können.

Aus der GB 2 208 055 A ist eine kontakt- und batterielose Chip-Karte mit einer Empfangsspule, einer Sende- und Empfangsstufe, die über ein von einem Schreib-Lese-Gerät erzeugtes elektromagnetisches Wechselfeld zum einen die Chip-Karte mit Energie versorgt und zum anderen die bidirektionale Datenübertragung zum Schreib-Lese-Gerät vornimmt, und mit einem von der Anwendung der Chip-Karte abhängigen Anwendungssteil, wobei die Chip-Karte einen Detektor zur Bestimmung der Feldstärke des Energie auf die Chipkarte übertragenden elektromagnetischen Wechselfeldes bekannt. Der bekannte Detektor besteht aus einem Schwellwert Komparator, der die nicht regulierte Ausgangsspannung einer Gleichrichterstufe überwacht und beim Rückgang dieser Spannung unter einen vorgegebenen Wert an seinem Ausgang ein Unterbrechungssignal erzeugt, das eine Abschaltung eines Mikroprozessors auslöst, solange noch die zum ordnungsgemäßen Abschalten notwendige Energie auf der Chip-Karte vorhanden ist.

Aufgabe der Erfindung ist es daher, eine Chip-Karte nach dem Oberbegriff des Anspruchs 1 anzugeben, bei der die durch das Wechselfeld des Schreib-Lese-Geräts übertragene Energiemenge vor dem Inbetriebnehmen einer stark Energie verzehrenden Funktion der Chip-Karte bestimmt werden kann.

Diese Aufgabe wird durch eine Chip-Karte mit den kennzeichnenden Merkmalen des Anspruchs 1 gelöst. Die vorteilhafte Weiterbildung der Erfindung ergibt sich aus den Unteransprüchen.

Bei der Chip-Karte nach der Erfindung ist ein Detektor zur Bestimmung der empfangenen Feldstärke des Wechselfelds vorgesehen, das vom Schreib-Lese-Gerät erzeugt wird und die Chip-Karte während des Betriebs mit Energie versorgt. Die durch das Wechselfeld übertragene Energiemenge ist hauptsächlich von der Feldstärke des von der Chip-Karte empfangenen Wechselfeldes abhängig. Durch die Detektion der Empfangsfeldstärke kann auf die der Chip-Karte zur verfügung stehenden Energiemenge geschlossen werden. Der Detektor zur Feldstärkemessung weist einen Schalter T1 und eine Last R1 auf. Zur Feldstärkemessung wird der Schalter T1 geschlossen, so daß die Last R1 parallel zur Empfangsspule 1 geschaltet wird.

In einer ersten Ausgestaltung der Erfindung wird als feldstärkeabhängiges Potential der Spannungsabfall entlang der Last im Feldstärkedetektor herangezogen. Bei geschlossenem Schalter fließt ein Strom durch die Last, der im zeitlichen Mittel proportional zur Empfangsfeldstärke ist. Die Messung des Spannungsabfalls entlang der Last R1 ergibt also ein Maß für die Größe der empfangenen Feldstärke und somit auch ein Maß für die der Chip-Karte zur Verfügung stehenden Energiemenge.

Gemäß einer zweiten Ausführungsform der Erfindung wird die in der Sende- und Empfangsstufe 2 aus dem Wechselfeld gewonnene Versorgungsspannung VSS, GND (= Ground) als feldstärkeabhängiges Potential genutzt. Bei geschlossenem Schalter T1 fließt ein Teil des von der Empfangsspule gelieferten Stroms über die Last R1. Bei geringer Empfangsfeldstärke sinkt damit die vom Sende- und Empfangsteil aus dem Spulenstrom gewonnene Versorgungsspannung VSS, GND der Chip-Karten. Somit kann auch die von der Sende- und Empfangsstufe erzeugte Versorgungsspannung beim geschlossenen Schalter T1 vom Feldstärkedetektor zur Bestimmung der Empfangsfeldstärke herangezogen werden.

In einer weiterführung der Erfindung werden Funktionen des Anwendungsteils der Chip-Karte, welche zur fehlerfreien Ausführung einen hohen Energiebedarf aufweisen, nur dann ausgeführt, wenn vom Feldstärkedetektor eine genügend hohe Empfangsfeldstärke detektiert wurde. Dabei muß die detektierte Empfangsfeldstärke die für ein sicheres und fehlerfreies Ausführen dieser Funktionen ausreichende Energiemenge sicherstellen. Zu diesen energieaufwendigen Funktionen des Anwendungsteils gehört beispielsweise das Programmieren bzw. Schreiben von PROM-, EPROM- oder EEPROM-Speicherzellenanordnungen.

Es ist ein wesentlicher Aspekt der Erfindung, daß die Last nicht ständig sondern nur zeitweise parallel zur Empfangsspule liegt und diese bedämpft. Durch die getaktete Feldstärkemessung steht der Sende- und Empfangsstufe während der übrigen Zeit bei abgeschalteter Last der vollständige Strom der Empfangsspule zur Energieversorgung zur Verfügung. Zum getakteten Zuschalten der Last R1 wird dem Schalter T1 ein Meßtaktsignal MOD zugeführt. Die Messung der Empfangsfeldstärke erfolgt dadurch im Takt des Meßtaktsignals.

In einer vorteilhaften Ausgestaltung der Erfindung wird das feldstärkeabhängige Potential mittels einer Komparatorschaltung mit einer geeigneten Referenzspannung verglichen. Der Komparatorschaltung wird neben dem feldstärkeabhängigen Potential in der Referenzspannung zusätzlich das Meßtaktsignal MOD zugeführt. Dadurch wird gewährleistet, daß das feldstärkeabhängige Potential nur bei angelegter Last, d.h. bei geschlossenem Schalter T1, von der Komparatorschaltung ausgewertet wird. Am Ausgang der Komparatorschaltung steht somit ein binäres Signal an, welches anzeigt, ob die empfangene Feldstärke einen vorgewählten wert erreicht bzw. überschritten hat. Bei richtiger Wahl der Referenzspannung wird angezeigt, ob die empfangene Feldstärke ausreicht, um bestimmte Funktionen des Anwenderteils durchzuführen.

In einer anderen vorteilhaften Ausgestaltung wird das feldstärkeabhängige Potential durch einen A/D-Wandler digitalisiert und in einem Speicherlatch zwischengespeichert. Am Ausgang des Speicherlatches kann das Ergebnis der Feldstärkemessung in digitaler Form zur weiteren Verarbeitung ausgelesen werden.

In einer vorteilhaften Weiterbildung wird dem Speicherlatch das Meßtaktsignal MOD zugeführt. Damit wird der schreibende Zugriff auf das Speicherlatch auf die Zeit begrenzt, in der auch die Last angelegt ist, d.h. der Schalter T1 geschlossen ist. Das Ergebnis der Feldstärkemessung wird in binärer bzw. digitalisierter Form an die Sende- und Empfangsstufe weitergeleitet. Eine Logikstufe in der Sende- und Empfangsstufe entscheidet dann, ob bestimmte Funktionsgruppen des Anwenderteils ausgeführt werden können oder nicht. Auch dem Anwenderteil kann das Ergebnis der Feldstärkemessung zugeführt werden, damit es dort weiterverarbeitet werden kann.

In einer vorteilhaften Ausgestaltung des Chip-Karten Systems, bestehend aus Chip-Karte und Schreib-Lese-Gerät, wird das von der Chip-Karte ermittelte Ergebnis der Messung der Empfangsfeldstärke dem Schreib-Lese-Gerät übermittelt. Das Schreib-Lese-Gerät paßt seine Sendeleistung gemäß der Empfangsfeldstärke in der Chip-Karte an. Dadurch wird erreicht, daß über einen erweiterten Abstandsbereich zwischen Chip-Karte und Schreib-Lese-Gerät stets eine ausreichende Energieversorgung der Chip-Karte gewährleistet ist und alle Funktionsgruppen des Anwenderteils ausgeführt werden können, ohne daß das Schreib-Lese-Gerät ständig mit einer erhöhten Sendeleistung arbeitet. Die Sendeleistung des Schreib-Lese-Geräts wird ständig an den Abstand zur Chip-Karte angepaßt.

Im folgenden sei die Erfindung anhand der Figuren und eines Ausführungsbeispiels erläutert.

Dabei zeigen
Figur 1 das Blockschaltbild einer Chip-Karte nach der Erfindung,
Figur 2 das Blockschaltbild einer ersten Ausgestaltung nach der Erfindung,
Figur 3 eine erste Auswerteschaltung nach der Erfindung,
Figur 4 eine zweite Auswerteschaltung nach der Erfindung,
Figur 5 das Beispiel eines Signalverlaufs in einer erfindungsgemäßen Schaltung.

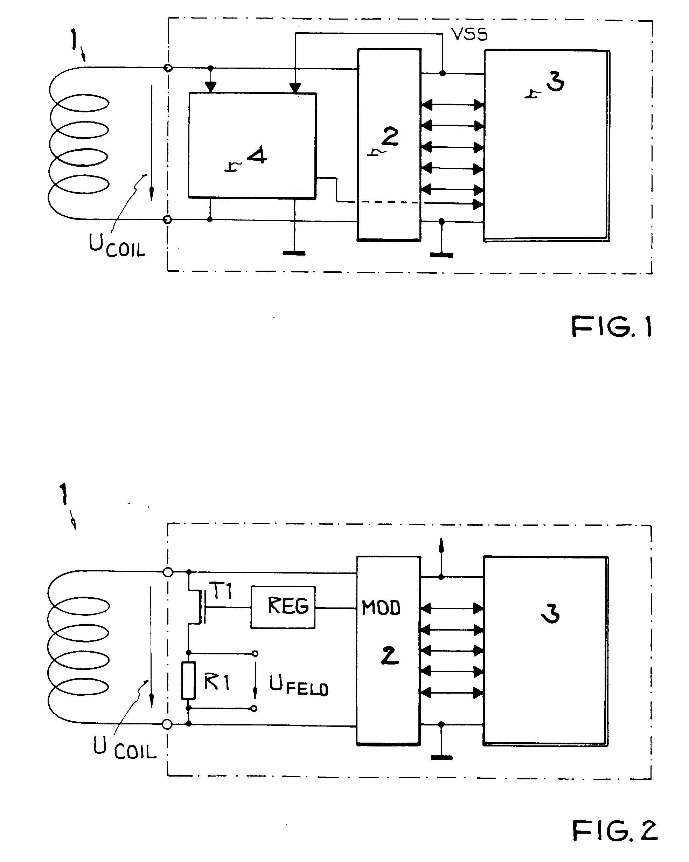

Die Figur 1 zeigt das Blockschaltbild einer kontakt- und batterielosen Chip-Karte nach der Erfindung. Ein stationäres Schreib-Lese-Gerät, das nicht in der Figur dargestellt ist, erzeugt ein RF-Feld, das die Chip-Karte mit Energie versorgt. Über das RF-Feld werden außerdem Daten zwischen Chip-Karte und Schreib-Lese-Gerät ausgetauscht. Die Chip-Karte weist im allgemeinen eine Empfangsantenne 1 auf. Dies ist im Ausführungsbeispiel vorteilhafterweiser eine Empfangsspule. Die vom RF-Feld in die Spule 1 induzierte Spannung U_{COIL} wird der Sende- und Empfangsstufe 2 der Chip-Karte zugeführt. Die Sende- und Empfangsstufe 2 gewinnt aus der Spulenspannung U_{COIL} zum einen die Versorgungsspannung VSS, GND für die Chip-Karte und zum anderen die empfangenen Daten D₁ ... D_{N}. Ein geeignetes Verfahren ist in der Anmeldung DE 41 07 311 A erwähnt. Die empfangenen Daten D₁ ... D_{N} werden z.B. in digitaler Form anhand eines Bussystems an den Anwenderteil 3 der C-Karte weitergeleitet. Zum Senden wird das RF-Feld über ein Bedämpfen der Empfangsspule 1 moduliert. Die Modulation des RF-Feldes wird vom Schreib-Lese-Gerät empfangen und ausgewertet. Die zu sendenden Daten werden vom Anwenderteil 3 zur Sende- und Empfangsstufe 2 geleitet, welche dann das Bedämpfen der Empfangsspule 1 regelt. Dabei ist zu beachten, daß die Spule nicht zu stark bedämpft wird, da ansonsten die Spannungsversorgung der Chip-Karte zusammenbrechen würde.

Der Anwenderteil 3 enthält im allgemeinen einen nichtflüchtigen Speicher zum dauerhaften Speichern der übertragenen Daten und weitere Schaltungsteile zum Verarbeiten dieser Daten. Zum Programmieren des nichtflüchtigen Speichers, welcher im allgemeinen von einer EEPROM-Anordnung genügender Größe gebildet wird, ist eine genügend große Energiemenge erforderlich, damit eine sichere Programmierung und ein sicherer Datenerhalt gewährleistet ist. Gemäß der Erfindung ist ein Detektor 4 zur Bestimmung der durch die Empfangsspule empfangene Feldstärke des vom Schreib-Lese-Gerät erzeugten RF-Feldes vorgesehen. Eine Auswertelogik läßt Funktionen wie z.B. das Schreiben in die EEPROM-Speicherzellen nur dann zu, wenn eine ausreichende Energiemenge auf der Chip-Karte zur Verfügung steht. Im ersten Ausführungsbeispiel ist zur Feldstärkemessung eine Reihenschaltung aus einem als Schalter dienenden ersten Transistor T1 und einer Last R1 vorgesehen. Diese Reihenschaltung verbindet die beiden Enden der Empfangsspule. Bei geschlossenem Schalter ist der Spannungsabfall über die Last R1 proportional zur empfangenen Feldstärke und damit gleichzeitig ein Maß für die auf dem Chip zur Verfügung stehenden Energiemenge. Da nun aber ein ständiges Bedämpfen der Empfangsspule mit der Last R1 mit einem hohen Energieverlust verbunden ist und außerdem die Reichweite beim Senden von Daten sehr stark verringern würde, erfolgt das Bedämpfen der Spule mittels der Last R1 zeitlich getaktet. Dazu wird dem als Schalter betriebenen Transistor T1 das Meßtaktsignal MOD zugeführt.

Durch das Meßtaktsignal MOD wird erreicht, daß die Last R1 periodisch parallel zur Empfangsspule geschalten wird. Weiterhin ist eine zusätzliche Regelschaltung REG vorgesehen, die verhindert, daß bei sehr kleinen Empfangsfeldstärken die Spannungsversorgung des IC's bei angelegter Last R1 zusammenbricht. In einem solchen Fall würde nämlich fast der gesamte Strom bei geschlossenem Schalter T1 durch die Last R1 fließen. Der verbleibende Rest würde nicht ausreichen um die übrigen Schaltungsteile des IC's ausreichend mit Energie zu versorgen. Wenn die Versorgungsspannung unter einen vorbestimmten Wert fällt, verhindert die Regelschaltung REG, daß der Schalter T1 geschlossen wird bzw. geschlossen bleibt, indem das Meßtaktsignal MOD nicht an den Schalter T1 weitergeleitet wird.

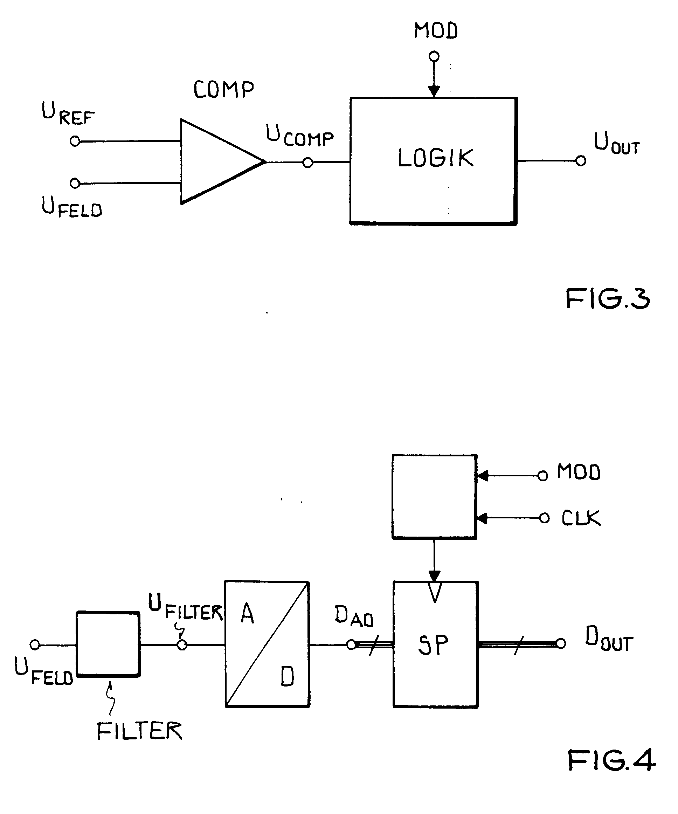

Als feldstärkeabhängiges Potential U_{FELD} wird im Ausführungsbeispiel nach der Figur 2 der Spannungsabfall entlang der Last R1 herangezogen. Das feldstärkeabhängige Potential U_{FELD} wird zur Auswertung Schaltungsteilen zugeführt, wie sie z.B. in den Figuren 3 und 4 dargestellt sind. Die Auswerteschaltung nach Figur 3 besteht aus einem Komparator, der das Eingangssignal U_{FELD} mit einer Referenzspannung U_{REF} vergleicht. Das Ergebnis des Vergleichs U_{COMP} wird einer Logikstufe zugeführt und in dieser mit dem Meßtaktsignal MOD verknüpft, da das Ausgangssignal des Komparators nur dann aussagekräftig ist, wenn der Schalter T1 durch das Meßtaktsignal MOD geschlossen wurde. Als Ausgangssignal U_{OUT} der Logikstufe liegt schließlich ein binäres Signal vor, welches anzeigt, ob das feldstärkeabhängige Potential bei der letzten Messung größer war als die Referenzspannung U_{REF}. Bei geeigneter Wahl der Referenzspannung ist das Ausgangssignal U_{OUT} ein verläßliches Maß dafür, ob die empfangene Energiemenge für die Durchführung energieintensiver Funktionen des Anwenderteils ausreichend ist. Entsprechend diesem Ausgangssignal werden diese Funktionen gesteuert.

In der Auswerteschaltung nach Figur 4 wird das feldstärkeabhängige Potential U_{FELD} digitalisiert weiterverarbeitet. Dazu wird das feldstärkeabhängige Potential U_{FELD} zunächst einer Filterstufe zugeführt und durch diese geglättet. Anschließend wird das geglättete Signal durch einen A/D-Wandler digitalisiert. Die Bitauflösung der Digitalisierung ist abhängig von der gewünschten Genauigkeit des digitalen Ausgangssignals D_{OUT}. Der Ausgang des A/D-Wandlers ist über entsprechend breite Busleitungen mit einem Speicherlatch SP verbunden. Der Eingang des Speichers SP wird mit einem Taktsignal CLK und dem Meßtaktsignal MOD gesteuert. Dadurch wird erreicht, daß das Ergebnis der A/D-Wandlung nur dann in das Speicherlatch geschrieben wird, wenn der Schalter T1 geschlossen ist und damit das feldstärkeabhängige Potential U_{FELD} Aussagekraft besitzt. Am Ausgang des Speicherlatches SP kann das digitale Ausgangssignal D_{OUT} zur weiteren Verarbeitung ausgelesen werden.

In einem zweiten Ausführungsbeispiel wird nicht der Spannungsabfall entlang der Last sondern direkt die von der Sende- und Empfangsstufe 2 erzeugte Versorgungsspannung VSS als feldstärkeabhängiges Potential U_{FELD} herangezogen, wenn an die Empfangsspule die Last angelegt ist. Mittels eines Analogkomparators wird die Versorgungsspannung mit einer auf dem IC generierten Referenzspannungsquelle verglichen. Der Analogkomparator wird, wie bereits oben beschrieben, vom Meßtaktsignal MOD angesteuert und nur während der eigentlichen Messung eingeschaltet. Dadurch steht dem IC außerhalb der Meßzyklen der gesamte induzierte Strom als Arbeitsstrom zur Verfügung.

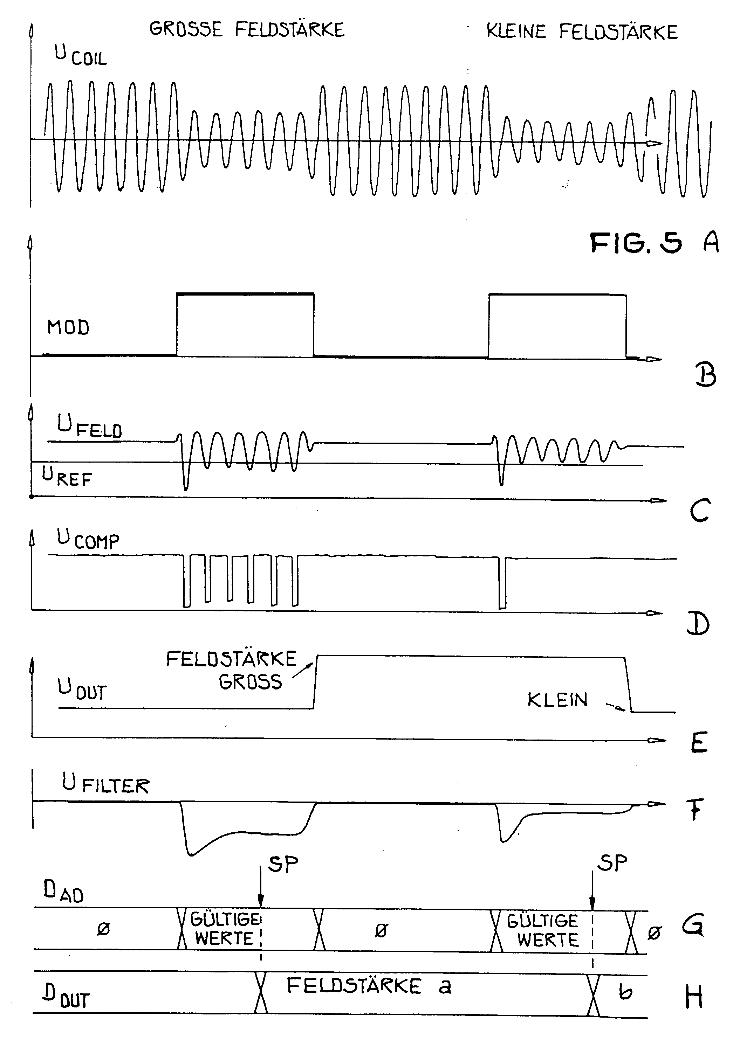

Die Figur 5 zeigt die Signalverläufe während der Feldstärkemessung für große Feldstärke im linken Teil und für kleine Feldstärke im rechten Teil der Diagramme. Dabei zeigen die Kurven A, B und C den zeitlichen Verlauf der Spulenspannung U_{COIL}, des Meßtaktsignals MOD und des feldstärkeabhängigen Potentials U_{FELD} entlang der Last R1. In der Kurve C ist zusätzlich die dem Komparator zugeführte Referenzspannung U_{REF} eingezeichnet. Der Verlauf der Kurve D zeigt das Ausgangssignal des Komparators gemäß Figur 3, die Kurve E zeigt das Ergebnis der Feldstärkemessung U_{OUT} am Ausgang der Logikschaltung. Die Verläufe der Kurven F, G und H zeigen den Signalverlauf bei der digitalen Signalauswertung nach der Figur 4. Die Kurve F zeigt die geglättete Ausgangsspannung des Filters, die Kurve H das Ausgangswort des A/D-Wandlers, wobei dessen Werte nur während des Meßtaktsignals Gültigkeit besitzen. Der mit dem Pfeil und SP markierte Zeitpunkt ist ausschlaggebend dafür, welcher Wert in das Speicherlatch geschrieben und von dort aus ausgelesen werden kann (Kurve H).

Die beiden Auswertearten lassen sich auch dann anwenden, wenn nicht der Spannungsabfall entlang der Last, sondern die Versorgungsspannung VSS an sich als feldstärkeabhängiges Potential Verwendung findet.

Weiterhin ist die Erfindung nicht auf Chip-Karten beschränkt. Sie kann bei allen batterie- und kontaktlosen IC-Anwendungen, wie z.B. Identifikationssysteme, vorteilhaft eingesetzt werden.

## Patentansprüche

1. Kontakt- und batterielose Chip-Karte mit einer Empfangsspule (1), einer Sende- und Empfangsstufe (2), die über ein von einem Schreib-Lese-Gerät erzeugtes elektromagnetisches Wechselfeld zum einen die Chip-Karte mit Energie versorgt und zum anderen die bidirektionale Datenübertragung zum Schreib-Lese-Gerät vornimmt, mit einem von der jeweiligen Anwendung der Chip-Karte abhängigen Anwendungsteil (3), und mit einem Detektor zur Bestimmung der Feldstärke des Energie auf die Chip-Karte übertragenden elektromagnetischen Wechselfelds,
dadurch gekennzeichnet,
daß der Detektor zur Feldstärkemessung einen Schalter (T1) und eine Last (R1) aufweist und daß zur Feldstärkemessung die Last (R1) durch den Schalter (T1) parallel zur Empfangsspule (1) geschaltet wird, und
daß der Spannungsabfall entlang der Last bei geschlossenem Schalter als feldstärkeabhängiges Potential (U_{FELD}) zur Feldstärkebestimmung herangezogen wird.

2. Kontakt- und batterielose Chip-Karte mit einer Empfangsspule (1), einer Sende- und Empfangsstufe (2), die über ein von einem Schreib-Lese-Gerät erzeugtes elektromagnetisches Wechselfeld zum einen die Chip-Karte mit Energie versorgt und zum anderen die bidirektionale Datenübertragung zum Schreib-Lese-Gerät vornimmt, mit einem von der jeweiligen Anwendung der Chip-Karte abhängigen Anwendungsteil (3), und mit einem Detektor zur Bestimmung der Feldstärke des Energie auf die Chip-Karte übertragenden elektromagnetischen Wechselfelds,
dadurch gekennzeichnet,
daß der Detektor zur Feldstärkemessung einen Schalter (T1) und eine Last (R1) aufweist und daß zur Feldstärkemessung die Last (R1) durch den Schalter (T1) parallel zur Empfangsspule (1) geschaltet wird, und
daß die von der Sende- und Empfangsstufe (2) gelieferte Versorgungsspannung bei geschlossenem Schalter (T1) als feldstärkeabhängiges Potential (U_{FELD}) zur Feldstärkebestimmung herangezogen wird.

3. Chip-Karte nach Anspruch 1 oder 2, dadurch gekennzeichnet, daß Funktionen des Anwendungsteils (3), die bei der Ausführung einen hohen Energiebedarf haben, nur dann ausgeführt werden, wenn der Detektor eine ausreichende Feldstärke detektiert hat.

4. Chip-Karte nach Anspruch 3, dadurch gekennzeichnet, daß die Funktionen mit hohem Energiebedarf das Schreiben in einen EPROM- bzw. EEPROM-Speicher beinhalten.

5. Chip-Karte nach einem der Ansprüche 1 - 4, dadurch gekennzeichnet, daß ein Meßtaktsignal (MOD) erzeugt wird, das dem Schalter (T1) zugeführt wird, so daß das Zuschalten der Last (R1) und damit die Feldstärkemessung im Takt des Meßtaktsignals (MOD) erfolgt.

6. Chip-Karte nach einem der Ansprüche 1 - 5, dadurch gekennzeichnet, daß das feldstärkeabhängige Potential (U_{FELD}) in einer Komparatorschaltung mittels eines Komparators (COMP) mit einer Referenzspannung (U_{REF}) verglichen wird.

7. Chip-Karte nach Anspruch 6, dadurch gekennzeichnet, daß die Komparatorschaltung eine Logikstufe aufweist, der das Meßtaktsignal (MOD) und das Ausgangssignal (U_{COMP}) des Komparators (COMP) zugeführt werden, so daß das Ausgangssignal (U_{COMP}) des Komparators (COMP) nur dann gültig ist, wenn auch der Schalter (T1) geschlossen ist.

8. Chip-Karte nach einem der Ansprüche 1 - 5, dadurch gekennzeichnet, daß das feldstärkeabhängige Potential (U_{FELD}) anhand eines A/D-Wandlers (A/D) digitalisiert und am Ausgang eines Speicherlatches (SP) zur weiteren digitalen Verarbeitung in digitaler Form (D_{OUT}) zur Verfügung gestellt wird.

9. Chip-Karte nach Anspruch 8, dadurch gekennzeichnet, daß dem Speicherlatch (SP) das Meßtaktsignal (MOD) zugeführt wird, so daß der Ausgangswert (D_{AD}) des A/D-Wandlers (A/D) nur dann in das Speicherlatch (SP) geschrieben wird, wenn auch der Schalter (T1) geschlossen ist.

10. Chip-Karte nach einem der Ansprüche 1-9, dadurch gekennzeichnet, daß das Ergebnis der Feldstärkemessung an die Sende- und Empfangsstufe (2) weitergeleitet wird.

11. Chip-Karte nach Anspruch 10, dadurch gekennzeichnet, daß das Ergebnis der Feldstärkemessung an das Schreib-Lese-Gerät gesendet wird.

12. Chip-Karte nach einem der Ansprüche 1 - 11, dadurch gekennzeichnet, daß das Ergebnis der Feldstärkemessung an den Anwenderteil (3) weitergeleitet wird.

13. Chip-Karten-System mit einer Chip-Karte nach Anspruch 12, dadurch gekennzeichnet, daß das Schreib-Lese-Gerät seine Sendeleistung gemäß dem Ergebnis der Feldstärkemessung in der Chip-Karte anpaßt, so daß über einen großen Abstandsbereich zwischen Schreib-Lese-Gerät und Chip-Karte die von der Chip-Karte empfangene Feldstärke konstant bleibt.

## Claims

1. Contactless chip card not employing a battery and comprising a reception coil (1) and a transmission and reception stage (2) which on the one hand supplies the chip card with energy from an alternating electromagnetic field produced by a read-write device and, on the other hand, effects the bidirectional transfer of data with the read-write device via said alternating field, and also comprising an application section (3) that is dependent on the current usage of the chip card and a detector for determining the field strength of the alternating electromagnetic field conveying energy to the chip card,
characterised in
that the detector for measuring the field strength comprises a switch (T1) and a load (R1) and that, for the purposes of measuring the field strength, the load (R1) is connected in parallel with the reception coil (1) by the switch (T1), and
that the voltage drop across the load when the switch is closed is used as a field strength dependent potential (U_{FELD}) for determining the field strength.

2. Contactless chip card not employing a battery and comprising a reception coil (1) and a transmission and reception stage (2) which on the one hand supplies the chip card with energy from an alternating electromagnetic field produced by a read-write device and, on the other hand, effects the bidirectional transfer of data with the read-write device via said alternating field, and also comprising an application section (3) that is dependent on the current usage of the chip card and a detector for determining the field strength of the alternating electromagnetic field conveying energy to the chip card,
characterised in
that the detector for measuring the field strength comprises a switch (T1) and a load (R1) and that, for the purposes of measuring the field strength, the load (R1) is connected in parallel with the reception coil (1) by the switch (T1), and
that the supply voltage delivered by the transmission and reception stage (2) when the switch (T1) is closed is used as a field strength dependent potential (U_{FELD}) for determining the field strength.

3. Chip card in accordance with Claim 1 or 2, characterised in that, those functions of the application section (3) that require a large amount of energy for their implementation are only performed when the detector has detected that there is an adequate field strength.

4. Chip card in accordance with Claim 3, characterised in that, those functions that require a large amount of energy include the process of writing into an EPROM or EEPROM memory.

5. Chip card in accordance with any of the Claims 1 - 4, characterised in that, a test clocking-signal (MOD) is generated and supplied to the switch (T1), so that the connecting up of the load (R1) and hence the measurement of the field strength occurs at the clock rate of the test clocking-signal (MOD).

6. Chip card in accordance with any of the Claims 1 - 5, characterised in that, the field strength dependent potential (U_{FELD}) is compared with a reference voltage (U_{REF}) in a comparator circuit by means of a comparator (COMP).

7. Chip card in accordance with Claim 6, characterised in that, the comparator circuit comprises a logic stage to which the test clocking-signal (MOD) and the output signal (U_{COMP}) of the comparator (COMP) are supplied, so that the output signal (U_{COMP}) of the comparator (COMP) is only valid if the switch (T1) is also closed.

8. Chip card in accordance with any of the Claims 1 - 5, characterised in that, the field strength dependent potential (U_{FELD}) is digitised with the aid of an A/D converter (A/D) and is made available at the output of a latching store (SP) in digital form (D_{OUT}) for further digital processing.

9. Chip card in accordance with Claim 8, characterised in that, the test clocking-signal (MOD) is supplied to the latching store (SP) so that the output value (D_{AD}) of the A/D converter (A/D) is only written into the latching store (SP) if the switch (T1) is also closed.

10. Chip card in accordance with any of the Claims 1 - 9, haracterised in that, the result of the field strength measurement is passed on to the transmission and reception stage (2).

11. Chip card in accordance with Claim 10, characterised in that, the result of the field strength measurement is sent to the read-write device.

12. Chip card in accordance with any of the Claims 1 - 11, characterised in that, the result of the field strength measurement is passed on to the application section (3).

13. Chip card system including a chip card in accordance with Claim 12, characterised in that, the read-write device adjusts its power output in correspondence with the result of the field strength measurement in the chip card so that the field strength received by the chip card remains constant over a large range of spacings between the read-write device and the chip card.

## Revendications

1. Carte à puce sans contact et sans pile comportant une bobine réceptrice (1), un étage émetteur et récepteur (2) qui, par l'intermédiaire d'un champ alternatif électromagnétique produit par un appareil d'écriture-lecture, d'une part alimente en énergie la carte à puce et d'autre part procède à la transmission bidirectionnelle des données avec l'appareil d'écriture-lecture, comportant une partie utilisation (3) fonction de l'utilisation respective de la carte à puce, et comportant un détecteur pour déterminer l'intensité du champ alternatif électromagnétique qui transmet de l'énergie sur la carte à puce,
caractérisée par le fait
que le détecteur prévu pour la mesure de l'intensité de champ présente un interrupteur (T1) et une charge (R1) et que pour la mesure de l'intensité de champ la charge (R1) est, par l'interrupteur (C1), mise en circuit parallèlement à la bobine réceptrice (1), et
que, pour déterminer l'intensité de champ, on fait appel à la chute de tension aux bornes de la charge, interrupteur fermé, en tant que potentiel (U_{champ}) fonction de l'intensité de champ.

2. Carte à puce sans contact et sans pile comportant une bobine réceptrice (1), un étage émetteur et récepteur (2) qui, par l'intermédiaire d'un champ alternatif électromagnétique produit par un appareil d'écriture-lecture, d'une part alimente en énergie la carte à puce et d'autre part procède à la transmission bidirectionnelle des données avec l'appareil d'écriture-lecture, comportant une partie utilisation (3) fonction de l'utilisation respective de la carte à puce, et comportant un détecteur pour déterminer l'intensité du champ alternatif électromagnétique qui transmet de l'énergie sur la carte à puce,
caractérisée par le fait
que le détecteur prévu pour la mesure de l'intensité de champ présente un interrupteur (T1) et une charge (R1) et que pour la mesure de l'intensité de champ la charge (R1) est, par l'interrupteur (C1), mise en circuit parallèlement à la bobine réceptrice (1), et
quel pour déterminer l'intensité de champ, on fait appel à la tension d'alimentation fournie par l'étage émetteur et récepteur (2), interrupteur (T1) fermé, en tant que potentiel (U_{champ}) fonction de l'intensité de champ.

3. Carte à puce selon la revendication 1 ou 2, caractérisée par le fait que des fonctions de la partie utilisation (3) qui, lors de leur exécution, présentent un besoin en énergie élevé, ne sont exécutées que si le détecteur a détecté une intensité de champ suffisante.

4. Carte à puce selon la revendication 3 caractérisée par le fait que des fonctions à besoin d'énergie élevé impliquent l'écriture dans une mémoire EPROM/mémoire morte programmable électriquement ou EEPROM/mémoire morte effaçable et reprogrammable électriquement.

5. Carte à puce selon l'une des revendications 1-4, caractérisée par le fait qu'est produit un signal cadencé de mesure (MOD) qui est amené à l'interrupteur (T1) de sorte que la mise en circuit de la charge (R1) et donc la mesure de l'intensité de champ se font à l'instant du signal cadencé de mesure (MOD).

6. Carte à puce selon l'une des revendications 1-5, caractérisée par le fait que le potentiel (U_{champ}) fonction de l'intensité de champ est comparé à une tension de référence (U_{ref}) au moyen d'un comparateur (COMP) dans un circuit de comparaison.

7. Carte à puce selon la revendication 6, caractérisée par le fait que le circuit de comparaison présente un étage logique auquel sont amenés le signal cadencé de mesure (MOD) et le signal de sortie (U_{comp}) du comparateur (COMP) de sorte que le signal de sortie (U_{comp}) du comparateur (COMP) n'est valable que si l'interrupteur (T1) est fermé.

8. Carte à puce selon la revendication 1-5, caractérisée par le fait que le potentiel (U_{champ}) fonction de l'intensité de champ est numérisé à l'aide d'un transducteur analogique/numérique (A/N) et qu'il est mis à dispositions sous forme numérisée (Dₛₒᵣₜᵢₑ) à la sortie d'un registre tampon (SP) pour la poursuite du traitement numérique.

9. Carte à puce selon la revendication 8, caractérisée par le fait que le signal cadencé de mesure (MOD) est amené au registre tampon (SP) de sorte que la valeur de sortie (D_{AD}) du transducteur analogique/numérique (A/N) n'est écrit dans le registre tampon (SP) que si l'interrupteur (T1) est fermé.

10. Carte à puce selon l'une des revendications 1-9, caractérisée par le fait que le résultat de la mesure de l'intensité de champ est transmis à l'étage émetteur et récepteur (2).

11. Carte à puce selon la revendication 10, caractérisée par le fait que le résultat de la mesure d'intensité de champ est envoyé à l'appareil d'écriture-lecture.

12. Carte à puce selon l'une des revendications 1-11, caractérisée par le fait que le résultat de la mesure de l'intensité de champ est transmise à la partie utilisation (3).

13. Système de carte à puce comportant une carte à puce selon la revendication 12, caractérisé par le fait que l'appareil d'écriture-lecture accorde sa puissance d'émission en fonction du résultat de la mesure de l'intensité de champ dans la carte à puce de sorte que l'intensité de champ reçue par la carte à puce reste constante sur une distance importante entre l'appareil d'écriture-lecture et la carte à puce.
